# EUROPÄISCHE PATENTSCHRIFT

(11) **EP 3 580 450 B1**
(45) Veröffentlichungstag und Bekanntmachung des Hinweises auf die Patenterteilung: **13.01.2021**
(21) Anmeldenummer: 18706424.1
(22) Anmeldetag: 05.02.2018
(51) Int. Cl.: F03D 3/02, F03D 3/04, F03D 15/00

(54) **WINDKRAFTANLAGE MIT RADIALTURBINEN UND EINEM GENERATOR**
WIND TURBINE HAVING RADIAL TURBINES AND A GENERATOR
ÉOLIENNE COMPRENANT DES TURBINES RADIALES ET UN GÉNÉRATEUR

(30) Priorität: 13.02.2017 DE 102017102816
(43) Veröffentlichungstag der Anmeldung: 18.12.2019
(73) Patentinhaber: DIRECTTECH Global GmbH, 47441 Moers (DE)
(72) Erfinder: NAVARRO ROMERO, Vicente, 47441 Moers (DE); THEISEN, Klaus, 40885 Ratingen (DE)
(74) Vertreter: Schoenen, Norbert
(86) Internationale Anmeldenummer: PCT/EP2018/052755
(87) Internationale Veröffentlichungsnummer: WO 2018/146036

(56) Entgegenhaltungen:
- EP-A1- 2 772 645
- DE-A1-102011 109 217
- US-A- 4 084 918

## Beschreibung

Die Erfindung betrifft eine Windkraftanlage mit Radialturbinen und einem Generator nach dem Oberbegriff des Anspruchs 1.

### Stand der Technik

Eine derartige Windkraftanlage ist aus der EP 2 652 318 B1 bekannt. Ein Generator für beide Turbinen sowie eine elektromagnetische Bremse sind hier bereits erwähnt.

Wenn jede Radialturbine die mechanische Energie über Antriebsriemen an separate Generatoren überträgt, treten die folgenden Probleme auf:
Hohe Kraftübertragungsverluste entstehen durch die Riemenspannung, die ins Lager drückt. Ein hoher Druck verursacht Energieverluste durch die Lagerreibung. Aber der hohe Druck wird gebraucht, um den Riemen schwingungs- und verschleißarm zu betreiben. Durch Drehmomentschwankungen bei stark wechselnden Winden wird der Riemen extrem beansprucht und könnte sogar überbeansprucht werden. Eine Alterung des Riemens durch Feuchtigkeit und Temperaturunterschiede bedingt einen vorzeitigen Ausfall und führt zu einer verminderten Betriebszeit.

Des Weiteren entsteht eine Geräuschentwicklung, die drehzahl- und lastabhängig ist und die Vorteile des Gesamtsystems minimiert.

Die US 4 084 918 A zeigt ebenfalls eine Windkraftanlage mit zwei nebeneinander und parallel ausgerichteten Radialturbinen mit je einer vertikalen Rotorwelle, die miteinander verbunden und um eine Schwenkachse parallel zu den Rotorwellen verschwenkbar sind, wobei ein V-förmiger Windverteiler außerhalb der Verbindungslinie der Rotorwellen liegt, und wobei ein und derselbe Generator von beiden Rotorwellen über Antriebswellen antreibbar ist. Der Generator dieser Windkraftanlage wird von den beiden Rotorwellen über jeweils ein Winkelgetriebe angetrieben, welches zur Übersetzung und zur Drehrichtungsumkehr ausgelegt ist. Außerdem sind die Radialturbinen, ebenso wie in der Erfindung, über die Antriebswellen mechanisch gekoppelt.

Aus der US 4 293 274 ist eine Windkraftanlage mit einer vertikalen Radialturbine bekannt, die ein Winkelgetriebe 18 und eine Trennkupplung zwischen der Rotorwelle 11 und dem Generator 22 aufweist, die bei Überlastung die Verbindung trennt. Ein weiteres Beispiel aus dem Stand der Technik ist aus DE102011109217 bekannt.

### Aufgabe und Lösung der Erfindung

Die Aufgabe der Erfindung besteht darin, bei einer Windkraftanlage der eingangs genannten Art die Sicherheit und die Effizienz zu erhöhen. Insbesondere sollen Schwingungen der Windkraftanlage bei ungleichmäßiger Windbelastung der beiden Radialturbinen und Überspannungen bei sehr starkem Wind auf einfache, kostengünstige und effektive Weise vermieden werden. Auch die anderen oben genannten Probleme sollen gelöst werden.

Diese Aufgabe wird bei einer Windkraftanlage der eingangs genannten Art erfindungsgemäß durch die Merkmale des Anspruchs 1 gelöst.

Erfindungsgemäß ist eine besondere Sicherheitseinrichtung vorgesehen, um eine Überlastung des Generators bei sehr starkem Wind zu vermeiden. Diese Sicherheitseinrichtung ist dreistufig. Zunächst wird eine elektrische Bremsung ausgeführt. Falls diese nicht ausreicht, aktiviert eine Steuerung eine mechanische Bremse und, falls dies ebenfalls nicht ausreicht, greift die dritte Sicherheitsstufe, nämlich die Aktivierung der Trennkupplungen.

Aus dem oben genannten Stand der Technik geht keine mehrstufige Sicherheitseinrichtung zur Vermeidung von Überlastungen des Generators bei starkem Wind hervor. Die dreistufige Sicherheitseinrichtung entsprechend der Erfindung, nämlich erstens elektrische Bremsung, zweitens mechanische Bremsung und drittens Aktivierung der Trennkupplungen, ist nicht in dem zitierten Stand der Technik beschrieben, auch nicht in Einzelteilen.

Damit wird insbesondere ein reibungsloser, wartungsarmer Betrieb der Anlage erreicht.

Vorteilhafte Ausgestaltungen der Erfindung sind in den Unteransprüchen angeführt.

Mechanische Übertragungsverluste werden drastisch reduziert. Ein erhöhter Wirkungsgrad wird durch die Reduzierung von mechanischen Einflüssen erreicht. Durch die Zusammenlegung von Übersetzung und Drehrichtungsumkehr in den Winkelgetrieben, anstelle eines Umkehrgetriebes und Riemenantriebs, werden die Übertragungsverluste reduziert.

Durch das Winkelgetriebe mit Wellen und Kupplungen wird der Wartungsaufwand, z. B. Ersatz der Verschleißteile, auf ein Minimum reduziert und die Lebenszeit der Komponenten erhöht.

Auch durch die Reduktion von Bauteilen und den Ersatz durch hochpräzise Bauteile mit geringeren Verschleiß- und Verlustverhalten und höherer Alterungsbeständigkeit erhöhen sich im Vergleich zum Riemenantrieb die Zuverlässigkeit der Übertragung der mechanischen Energie und die Lebensdauer drastisch.

Durch die genannten Maßnahmen wird außerdem die Geräuschemission drastisch reduziert, welches zu erhöhten Einsatzmöglichkeiten (Standorte) führt.

Durch die Verwendung hochwertiger Komponenten und das Entfernen alterungsanfälliger Bauteile wird der Wartungsaufwand auf ein Minimum reduziert. Des Weiteren ermöglicht der hauptsächliche Einsatz von Standardbauteilen eine schnelle Verfügbarkeit von Ersatzteilen. Dementsprechend werden Stillstandszeiten minimiert.

Eine Erhöhung der Sicherheit wird durch den Einsatz einer so genannten Losbrechkupplung im Übergang von den Rotoren zum Generator erreicht, die im Falle einer Überlastung oder einem Ausfall der Sicherheitsbremse bei Extremwetter (hohe Windgeschwindigkeiten/starke Böen) die Rotoren vom Generator trennt. Im Fall von Extrembedingungen, insbesondere bei sehr hohen Windgeschwindigkeiten mit starken Böen, welche zum Erreichen der ausgelegten maximalen standortbedingten oder kundenspezifischen Anlagenkapazität führen, wird der Generator vor dem Erreichen eines kritischen Bereichs vom Antrieb (Rotor) getrennt. So wird sichergestellt, dass - selbst bei einer eher unwahrscheinlichen Überforderung der Sicherheitsbremse - es zu keiner gefährlichen Überspannung kommen kann, welche die Anlage oder Personen schädigen könnte.

Vorteilhaft ist die mechanische Kopplung der Rotoren zur besseren Ausrichtung und Reduzierung von Regelschwingungen sowie der Betrieb der Anlage über nur einen Generator. Durch die Kopplung der Rotoren wird das Schwingungsverhalten des Ausrichtvorgangs der Windkraftanlage minimiert und demzufolge das Regelverhalten der Einspeiseeinheit verbessert und der Ertrag optimiert. Des Weiteren ermöglicht die Kopplung den Betrieb der Anlage mittels nur eines Generators, welches die Kosten senkt und den Wirkungsgrad erhöht.

Besonders wichtig ist die erfindungsgemäß erreichte erhöhte Schutzfunktion und Steigerung der Effizienz und Langlebigkeit.

Mit dem Begriff "Antriebsstrang" werden hier die mechanischen Bauteile zur Übertragung der Rotationsenergie von der jeweiligen Rotorwelle (1) der Radialturbine zum Generator (9) bezeichnet.

Durch den Einsatz des Antriebsstranges in der beschriebenen Form werden der Betrieb selbst sowie die Betriebssicherheit der Anlage optimiert. Des Weiteren werden mechanische und elektrische Verluste minimiert und somit die Effizienz gesteigert. Durch den Einsatz von Standardbauteilen von etablierten Herstellern ist die Ersatzteilversorgung gewährleistet und zeitnah möglich.

### Ausführungsbeispiel

Im Folgenden wird ein Ausführungsbeispiel der Erfindung anhand von Zeichnungen näher beschrieben. In allen Zeichnungen haben gleiche Bezugszeichen die gleiche Bedeutung und werden daher gegebenenfalls nur einmal erläutert.

### Es zeigen

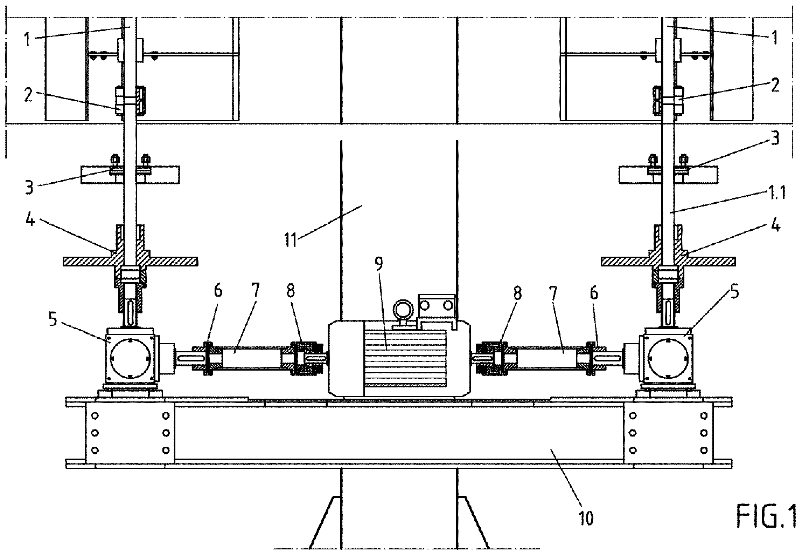

- Figur 1: eine Darstellung des gesamten Antriebsstrangs in einer Seitenansicht von hinten, mit allen kraftübertragenden Komponenten und einem Teilausschnitt der kraftzuführenden Rotoren mit den Rotorwellen (1),

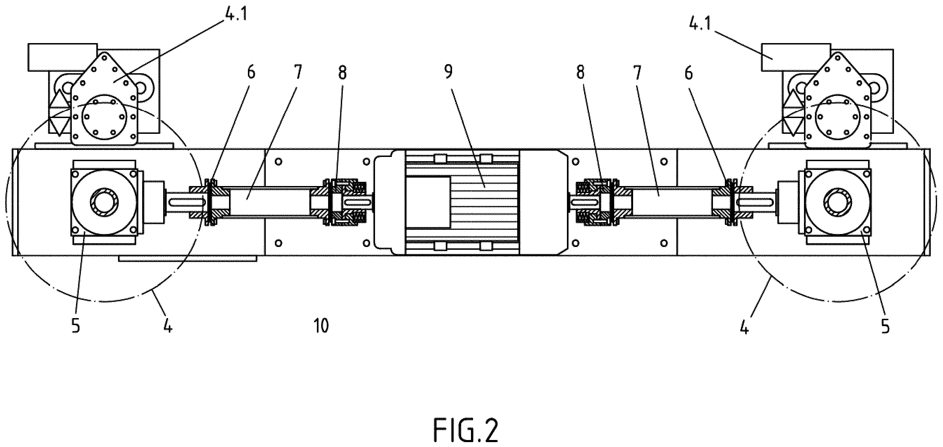

- Figur 2: den Antriebsstrang in einer Ansicht von oben (Draufsicht) zusammen mit dem Bremssattel (4.1),

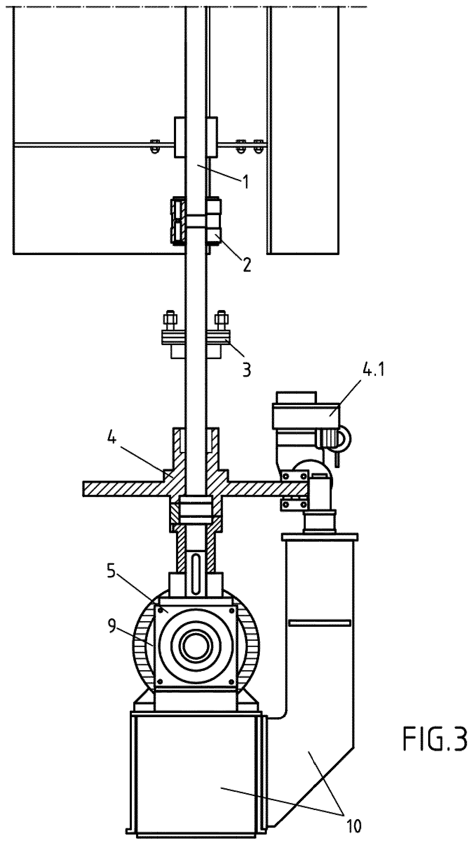

- Figur 3: den Antriebsstrang in einer Seitenansicht von links und

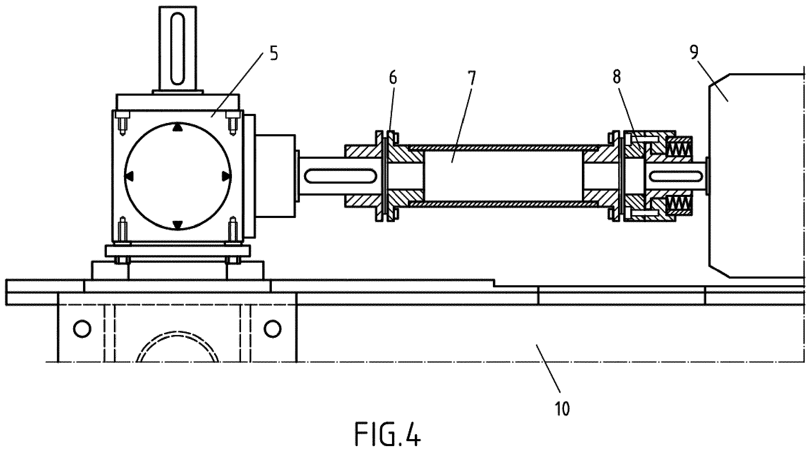

- Figur 4: einen Teilausschnitt des Antriebsstranges nach Figur 1 zwischen Generator/Getriebe, links vom Generator.

Die vorgelagerte energieerzeugende Anlage (Energiequelle) mit den zwei Rotorwellen (1) führt die Bewegungsenergie über eine Wellenkupplung (2) dem Antriebsstrang über eine Welle (1.1) zu. Eine Bremsscheibe (4) mit Kupplung verbindet die Welle (1.1) mit einem Winkelgetriebe (5), welches die zugeführte Energie übersetzt (Übersetzungsverhältnis je nach Leistungsauslegung des Generators) und für die richtige Drehrichtung von Wellenkupplung (6), Welle (7), Trennkupplung (8) und Generator (9) sorgt. Der Generator (9) wandelt die ihm zugeführte Bewegungsenergie in elektrische Energie um.

Das Winkelgetriebe (5) dient also außerdem zur Übersetzung und zur Drehrichtungsumkehr.

Vorzugsweise können statt eines einzigen Generators (9) auch mehrere Generatoren in einem Gehäuse vorgesehen sein, z. B. in Form von zusätzlichen Wicklungspaaren. Dabei kann das eine Wicklungspaar für niedrige Leistungen und das andere Wicklungspaar für höhere Leistungen ausgelegt sein. Bis zu drei Wicklungspaare können vorgesehen sein.

Im Falle einer Überlastung des Generators (9) versucht eine hier nicht dargestellte Steuerung (Inverter und Steuerungslogik) den Energieüberschuss durch elektrische Bremsung abzuführen. Sollte dies nicht gelingen, wird die mechanische Bremse mit Bremsscheibe (4) über einen Bremssattel (4.1) aktiviert. Sollte auch dies nicht ausreichen und wird ein vordefiniertes Drehmoment an der Trennkupplung (8) erreicht, gegebenenfalls durch vordefinierte Grenzparameter der Steuerung erzeugt, so trennt die Trennkupplung (8) den Generator (9) von der Energiezufuhr durch die Welle (7) ab. Dies führt dann zum Stillstand des Generators (9) und somit zum Spannungsausfall. Dadurch geht vom Generator keine Gefahr durch Überspannung mehr aus. Dies passiert sowohl links wie rechts vom Generator (9), also für beide Rotoren.

Daher wird als eine vorteilhafte Ausgestaltung der Erfindung vorgeschlagen, dass die Steuerung beim Erreichen von definierten Parametern durch eine Belastung des Generators (9) ein vordefiniertes Drehmoment erzeugt, welches die Trennkupplungen (8) auslöst und die Rotorwellen (1) vom Generator (9) trennt. Die genannten definierten Parameter können unterschiedlich sein und hängen insbesondere von der Bauform und den spezifischen technischen Eigenschaften der Windkraftanlage ab.

Ein weiterer Vorteil der Erfindung liegt in Folgendem: Die Sicherheitsbremse kann kleiner als üblich ausfallen, da im Sicherheitsfall (Störfall) und bei Überlastung der Generator von der Energiezufuhr abgetrennt wird und somit keine Gefahr durch Überspannung mehr besteht. Des Weiteren muss die Turbinenkonstruktion bzw. die Konstruktion des Energieerzeugers nicht ertüchtigt werden, um größere Kräfte aufnehmen zu können, nämlich die in diesem Fall höheren Bremsmomente, welche durch die normalerweise nötige größere Bremse entstehen würden.

Ein weiterer Vorteil der Erfindung liegt in der Verbesserung der Montagefreundlichkeit der Anlage, da der Antriebsstrang als vormontiertes Bauteil bereitgestellt werden kann, welches zur Reduktion von Montage- und Ausrichtfehlern führt.

### Bezugszeichenliste

- 1: Rotorwelle
- 1.1: Welle zur Energiezuführung
- 2: Wellenkupplung des Rotors
- 3: Trag-/Führungslager
- 4: Bremsscheibe mit Kupplung
- 4.1: Bremssattel
- 5: Winkelgetriebe
- 6: Wellenkupplung
- 7: Antriebswelle, Welle
- 8: Trennkupplung
- 9: Generator
- 10: Tragtraverse des Antriebsstrangs
- 11: Standrohr der Windturbine

## Patentansprüche

1. Windkraftanlage mit Radialturbinen und einem Generator (9), wobei zwei nebeneinander und parallel ausgerichtete Radialturbinen mit je einer vertikalen Rotorwelle (1) angeordnet sind, die miteinander verbunden und um eine Schwenkachse parallel zu den Rotorwellen (1) verschwenkbar sind, wobei die Schwenkachse und ein V-förmiger Windverteiler außerhalb der Verbindungslinie der Rotorwellen (1) und beide auf der gleichen Seite der Verbindungslinie liegen,
wobei der Generator (9) mechanisch über ein Getriebe (5) mit den Rotorwellen (1) verbunden ist und ein und derselbe Generator (9) von beiden Rotorwellen (1) antreibbar ist,
**dadurch gekennzeichnet,**
**dass** der Generator (9) über Antriebswellen (7) antreibbar ist,
**dass** Trennkupplungen (8) zwischen den Rotorwellen (1) und dem Generator (9) vorgesehen sind, die bei Überlastung die Verbindung trennen,
**dass** eine Steuerung vorgesehen ist und die Steuerung bei der Überlastung die Trennkupplungen (8) auslöst,
**dass** die Steuerung beim Erreichen von definierten Parametern durch eine Belastung des Generators (9) ein vordefiniertes Drehmoment erzeugt, welches die Trennkupplungen (8) auslöst und die Rotorwellen (1) vom Generator (9) trennt,
**dass** eine mechanische Bremse mit Bremsscheibe (4) und Bremssattel (4.1) vorgesehen ist,
**dass** die Steuerung derart ausgebildet ist, dass sie im Fall einer Überlastung des Generators (9) den Energieüberschuss durch elektrische Bremsung abführt und, falls dies nicht ausreicht, die mechanische Bremse aktiviert, und, falls auch dies nicht_ausreicht und ein vordefiniertes Drehmoment an einer der Trennkupplungen (8) erreicht wird, die Trennkupplung (8) aktiviert, um den Generator (9) von der Energiezufuhr durch die Welle (7) abzutrennen.

2. Windkraftanlage nach Anspruch 1,
**dadurch gekennzeichnet,**
**dass** der Generator (9) von den beiden Rotorwellen (1) über jeweils ein Winkelgetriebe (5) angetrieben wird.

3. Windkraftanlage nach Anspruch 2,
**dadurch gekennzeichnet,**
**dass** die Winkelgetriebe (5) zur Übersetzung und zur Drehrichtungsumkehr ausgelegt sind.

4. Windkraftanlage nach Anspruch 1,
**dadurch gekennzeichnet,**
**dass** die Radialturbinen über die Antriebswellen (7) mechanisch gekoppelt sind.

## Claims

1. Wind turbine facility having radial turbines and a generator (9), two radial turbines which are aligned one next to the other and in parallel and which each have a vertical rotor shaft (1) being arranged, which turbines are connected to one another and are pivotable about a pivot axis in parallel with the rotor shafts (1), the pivot axis and a V-shaped wind distributor being arranged outside the connecting line of the rotor shafts (1) and both on the same side of the connecting line, the generator (9) being mechanically connected to the rotor shafts (1) via a gear (5), and it being possible for the same generator (9) to be driven by both rotor shafts (1), **characterized in that** the generator (9) can be driven via drive shafts (7), **in that** decouplers (8) are provided between the rotor shafts (1) and the generator (9), which decouplers release the connection in the event of overload, **in that** a control means is provided and the control means triggers the decouplers (8) in the event of overload, **in that** when defined parameters are reached, the control means generates a predefined torque by loading the generator (9), which torque triggers the decouplers (8) and separates the rotor shafts (1) from the generator (9), **in that** a mechanical brake having a brake disc (4) and a brake caliper (4.1) is provided, **in that** the control means is designed such that in the event of an overload of the generator (9), the control means dissipates the excess energy by electrical braking and, if this is not sufficient, activates the mechanical brake and, if this is also not sufficient and a predefined torque is achieved at one of the decouplers (8), activates the decoupler (8) in order to separate the generator (9) from the energy supply through the shaft (7).

2. Wind turbine facility according to claim 1, **characterized in that** the generator (9) is driven by the two rotor shafts (1) via an angular gear (5) in each case.

3. Wind turbine facility according to claim 2, **characterized in that** the angular gears (5) are designed for translation and for reversing the direction of rotation.

4. Wind turbine facility according to claim 1, **characterized in that** the radial turbines are mechanically coupled via the drive shafts (7).

## Revendications

1. Éolienne comportant des turbines radiales et un générateur (9), deux turbines radiales juxtaposées et orientées parallèlement l'une à l'autre étant disposées avec respectivement un arbre de rotor vertical (1), les turbines radiales étant reliées l'une à l'autre et pouvant pivoter autour d'un axe de pivotement parallèlement aux arbres de rotor (1), l'axe de pivotement et un élément répartiteur de vent en forme de V étant situés à l'extérieur de la ligne de liaison des arbres de rotor (1) et étant tous deux situés du même côté de la ligne de liaison,
le générateur (9) étant relié mécaniquement aux arbres de rotor (1) par l'intermédiaire d'un engrenage (5) et un seul et même générateur (9) pouvant être entraîné par les deux arbres de rotor (1),
**caractérisée en ce**
**que** le générateur (9) peut être entraîné par l'intermédiaire d'arbres d'entraînement (7), que des embrayages de séparation (8) sont prévus entre les arbres de rotor (1) et le générateur (9), lesquels embrayages de séparation séparent la liaison en cas de surcharge,
**qu'**une commande est prévue et que la commande déclenche les embrayages de séparation (8) en cas de surcharge,
**que** la commande, lorsque des paramètres définis sont atteints, génère un couple prédéfini par une charge du générateur (9), lequel couple prédéfini déclenche les embrayages de séparation (8) et sépare les arbres de rotor (1) du générateur (9), qu'un frein mécanique comportant un disque de frein (4) et un étrier de frein (4.1) est prévu,
**que** la commande est conçue de telle sorte qu'en cas de surcharge du générateur (9), elle évacue l'excès d'énergie par freinage électrique et, si cela est insuffisant, active le frein mécanique et, si cela est également insuffisant et qu'un couple prédéfini est atteint sur l'un des embrayages de séparation (8), active l'embrayage de séparation (8) afin de séparer le générateur (9) de l'alimentation en énergie par l'arbre (7).

2. Éolienne selon la revendication 1,
**caractérisée en ce**
**que** le générateur (9) est entraîné par les deux arbres de rotor (1) respectivement par l'intermédiaire d'un engrenage angulaire (5).

3. Éolienne selon la revendication 2,
**caractérisée en ce**
**que** les engrenages angulaires (5) sont conçus pour la transmission et pour l'inversion du sens de rotation.

4. Éolienne selon la revendication 1,
**caractérisée en ce**
**que** les turbines radiales sont accouplées mécaniquement par l'intermédiaire des arbres d'entraînement (7).
